# FASCICULE DE BREVET EUROPEEN

(11) **EP 1 762 372 B1**
(45) Date de publication et mention de la délivrance du brevet: **13.08.2008**
(21) Numéro de dépôt: 06291386.8
(22) Date de dépôt: 01.09.2006
(51) Int. Cl.: B29D 11/00, B29C 33/30, B29C 39/26

(54) **Dispositif pour la réalisation d'une lentille optique en matiére synthétique polymérisable**
Vorrichtung zur Herstellung einer optischen Linse aus synthetischem Kunststoff
Device for manufacturing of an optic lens in synthetic polymer material

(30) Priorité: 13.09.2005 FR 0509338
(43) Date de publication de la demande: 14.03.2007
(73) Titulaire: ESSILOR INTERNATIONAL (Compagnie Générale d'Optique), F-94220 Charenton-le-Pont (FR)
(72) Inventeur: Felten, Yohann Essilor International, 94220 Charenton Le Pont (FR); Huard, Marc Essilor International, 94220 Charenton Le Pont (FR)
(74) Mandataire: Santarelli

(56) Documents cités:
- EP-A- 1 440 780
- EP-A- 1 440 788
- US-A- 5 547 618

## Description

L'invention a trait à la réalisation des lentilles optiques, et plus particulièrement, mais non exclusivement, des lentilles ophtalmiques.

On sait qu'il est possible de réaliser de telles lentilles en matière synthétique polymérisable, généralement appelée matière organique, initialement à l'état liquide et solidifiable par polymérisation, notamment par insolation (photopolymérisation) et/ou chauffage (thermopolymérisation).

On connaît déjà, pour la réalisation d'une lentille optique dans une telle matière, divers dispositifs comportant un élément de fermeture apte à enserrer annulairement deux coquilles de moulage pour définir avec lesdites coquilles une cavité de moulage. Dans certains dispositifs, l'élément de fermeture est une sorte de ruban adhésif appliqué sur la tranche des deux coquilles de moulage. Dans d'autres dispositifs, il s'agit d'un joint annulaire en élastomère.

Ainsi, la demande internationale WO 93/21010 décrit un dispositif dans lequel l'élément de fermeture est un joint annulaire flexible engagé autour de l'une des coquilles de moulage tandis qu'autour du joint flexible est fixée une bride rigide pour le renforcer. La deuxième coquille de moulage est ensuite amenée dans le joint flexible par un chariot qui la positionne à la distance voulue de la première coquille, le chariot étant ensuite verrouillé en position. Une source de matière à mouler est reliée à la cavité de moulage par une conduite flexible ayant une extrémité tronconique engagée dans un petit trou ménagé en partie basse du joint.

La demande internationale WO 03/078144 décrit également un dispositif dans lequel l'élément de fermeture est un joint annulaire flexible présentant un trou pour le remplissage de la cavité de moulage, ce trou étant aménagé en partie haute du joint et recevant une buse d'introduction de la matière à mouler, et plus précisément un ensemble comportant la buse d'introduction de la matière polymérisable et une autre buse servant, à la fin du remplissage, à aspirer le trop-plein de matière polymérisable.

On connaît également par le brevet européen 0 715 946, auquel correspond le brevet américain 5,547,618, un dispositif décrit ci-après à l'appui des figures 1 à 3 des dessins annexés, où :
- la figure 1 est une vue en perspective de ce dispositif ;
- les figures 2A, 2B, 2C et 2D sont des vues semblables à celle de la figure 1, mais en réduction, illustrant les opérations successives de mise en oeuvre de ce dispositif ; et
- la figure 3 est, à la même échelle que la figure 1, une vue en perspective illustrant le démoulage de la lentille optique obtenue à l'aide de ce dispositif.

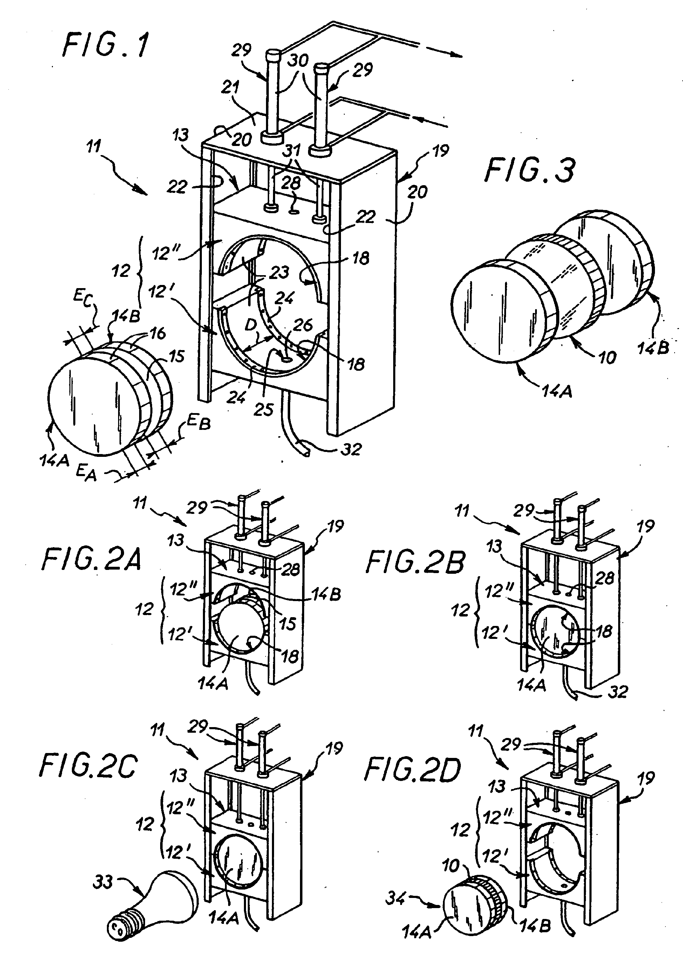

La lentille 10 illustrée (figure 3) a été obtenue avec le dispositif 11. Il s'agit par exemple d'un palet pour verre de lunettes qui sera ensuite taillé périphériquement à la forme requise pour être installée dans une monture de lunettes.

Ici, le contour général de la lentille ou palet 10 est circulaire.

Le dispositif 11 comporte deux mors 12' et 12" qui, pour la constitution d'un moule 13, sont aptes à enserrer, de chant, conjointement, entre eux, deux coquilles de moulage 14A et 14B disposées sensiblement parallèlement l'une à l'autre, en formant à l'égard de ces coquilles de moulage 14A et 14B un élément de fermeture 12 définissant avec elles la cavité de moulage 15 recherchée.

Ici, le mors 12' est fixe et le mors 12" est mobile.

Les coquilles de moulage 14A et 14B présentent des surfaces internes (surfaces en regard l'une de l'autre lorsque le moule est assemblé) dont la géométrie correspond à celle qui est recherchée pour la lentille à réaliser.

Soient E_{A} et E_{B} l'épaisseur de ces coquilles de moulage 14A et 14B le long de leur tranche 16, et soit E_{C} l'écartement à leur donner pour la constitution de la cavité de moulage 15.

La surface intérieure 18 de chacun des mors 12' et 12" est globalement hémicylindrique, suivant le rayon du contour périphérique des coquilles de moulage 14A et 14B.

Les mors 12' et 12" sont en prise avec un bâti 19 commun, formé ici par deux flasques latéraux 20 et une traverse 21 reliant l'un à l'autre les flasques latéraux 20 à l'une de leurs extrémités. Les flasques latéraux 20 s'étendent verticalement, parallèlement l'un à l'autre, et la traverse 21 s'étend horizontalement à leur extrémité supérieure.

Les deux mors 12' et 12" sont échelonnés verticalement sur le bâti 19, le long des flasques latéraux 20, l'axe de leurs surfaces intérieures 18 étant donc horizontal.

Le moule que forment les mors 12' et 12" avec les coquilles 14A et 14B est donc lui aussi d'axe horizontal.

Le mors 12' est fixé au bâti 19, ici par vissage, et le mors 12" est en prise à coulissement avec des rainures 22 ménagées à cet effet sur le bâti 19, et plus précisément sur la face interne des flasques latéraux 20.

Chacun des mors 12' et 12" est formé par un bloc métallique massif.

La surface intérieure 18 de chacun des mors 12' et 12" comporte un revêtement 23 en matière synthétique, lequel revêtement est fixé grâce à une bride 24 hémicirculaire prévue à chacune des extrémités incurvées des surfaces 18.

La distance D séparant l'une de l'autre les deux brides 24 est plus grande que la somme des épaisseurs E_{A} et E_{B} des coquilles de moulage 14A et 14B et de l'écartement E_{C} les séparant l'une de l'autre.

Le mors 12' inférieur est traversé de part en part par un perçage 25 formant à son débouché sur sa surface intérieure 18 une ouverture de coulée 26 pour la cavité de moulage 15. Le mors 12" supérieur est également traversé de part en part par un perçage 28 formant évent.

Ici, l'ouverture de coulée 26 est au point le plus bas de la surface intérieure 18 du mors 12' inférieur tandis que le perçage 28 du mors 12" supérieur débouche au point le plus haut de la surface intérieure 18 de ce mors.

Pour sa commande, le mors 12" est soumis à deux vérins à double effet 29, disposés parallèlement l'un à l'autre.

Chaque vérin 29 est porté, par son corps 30, par la traverse 21 du bâti 19 tandis que, par sa tige de piston 31, ils sont attelés au mors 12" mobile.

Sur le perçage 25 du mors fixe 12' est branchée une canalisation 32, pour le raccordement de la cavité de moulage 15 à une quelconque source d'alimentation en matière à mouler (non représentée).

La mise en oeuvre du dispositif 11 va maintenant être décrite.

Dans un premier temps, le moule 13 est assemblé.

Pour ce faire, le mors 12" supérieur est placé à l'écart du mors 12' inférieur, les coquilles de moulage 14A et 14B sont mises en place sur le mors 12' inférieur, par simple emboîtement dans la surface intérieure 18 de ce mors, en les disposant de chant, à distance l'une de l'autre, parallèlement l'une à l'autre, à l'écartement E_{C} correspondant à celui souhaité pour la cavité de moulage 15 à former (figure 2A).

Le seul emboîtement des coquilles de moulage 14A et 14B dans la surface inférieure 18 du mors 12' suffit à leur maintien.

Le mors 12" est alors abaissé, à l'aide des vérins double effet 29, jusqu'à venir s'appliquer par sa surface intérieure 18 sur la tranche des coquilles de moulage 14A et 14B (figure 2B).

Le moule 13 étant ainsi fermé, il est possible, par la canalisation 32, d'en assurer le remplissage, en y introduisant la quantité de matière à mouler nécessaire avec des moyens de pompage propres à assurer une alimentation continue, c'est-à-dire dépourvue d'à-coup, de la cavité de moulage 15 en matière à mouler.

Pour l'initialisation de la polymérisation de la matière ainsi moulée, il est ensuite procédé par insolation.

Pour ce faire, il est associé, au dispositif 11, une source de rayonnement 33, laquelle est présentée au droit de l'une des coquilles de moulage 14A et 14B, ici la coquille 14A (figure 2C).

La source de rayonnement 33 est ici une source de rayonnement ultraviolet et la coquille de moulage 14A est ici en verre, au moins partiellement transparent au rayonnement ultraviolet.

Lorsqu'est effectuée une polymérisation au moins initiale de la lentille optique 10 à obtenir, le moule 13 est ouvert en relevant le mors 12" supérieur à l'aide des vérins double effet 29, puis le bloc 34 que forme alors la lentille optique 10 et les coquilles 14A et 14B enserrant la lentille 10 est dégagé du mors 12' inférieur (figure 2D).

Après achèvement, si nécessaire, de la polymérisation de la matière moulée, les coquilles de moulage 14A et 14B sont dégagées de la lentille optique 10 (figure 3).

On connaît encore par les demandes de brevet européen 1 440 780 et 1 440 788, auxquelles correspondent les demandes de brevet américain 2004/0150125 et 2004/0262792, respectivement, un dispositif semblable au dispositif 11 qui vient d'être décrit, mais où il est prévu, pour le raccordement de la cavité de moulage 15 à la source d'alimentation en matière à mouler, non pas un simple perçage 25 auquel est directement branchée la canalisation 32, mais un dispositif de remplissage comportant une vanne et une buse : la vanne est montée en dessous du mors tel que 12' et la buse est disposée dans le mors, la vanne présentant un canal d'écoulement de la matière à mouler dont l'orifice d'entrée communique avec la canalisation telle que 32 et dont l'orifice de sortie communique avec la buse, laquelle présente un canal intérieur jouant le rôle du perçage 25.

On connaît enfin une machine conforme aux demandes de brevet européen 1 440 780 et 1 440 788 dont il vient d'être question, machine dans laquelle l'assemblage de la buse et du revêtement tel que 23 du mors tel que 12' s'effectue par collage, le revêtement tel que 23 étant découpé pour former une ouverture de coulée telle que 26 dans le prolongement du canal intérieur de la buse.

L'invention vise à fournir un dispositif du même genre, c'est-à-dire un dispositif dont l'élément de fermeture présente un canal d'introduction de la matière polymérisable dans la cavité de moulage, qui soit particulièrement simple, commode et fiable tant à la fabrication qu'à l'utilisation.

Elle propose à cet effet un dispositif pour la réalisation d'une lentille optique en matière synthétique polymérisable, comportant un élément de fermeture apte à enserrer annulairement deux coquilles de moulage pour définir avec lesdites coquilles une cavité de moulage, ledit élément de fermeture comportant une paroi en matière synthétique pour entrer en contact avec lesdites coquilles de moulage, ledit élément de fermeture présentant un canal d'introduction de la matière à mouler débouchant dans la cavité de moulage par une ouverture de coulée ; caractérisé en ce que ledit élément de fermeture comporte un joint formant ladite paroi de contact et formant ledit canal d'introduction, lequel joint est fait d'une matière élastomère et d'un insert rigide surmoulé au moins partiellement par ladite matière élastomère, ledit canal d'introduction étant interne audit insert selon la revendication 1.

La synergie entre l'insert et la matière élastomère offerte par le surmoulage permet de conformer le canal d'introduction de façon particulièrement précise et reproductible, et ceci par une opération de fabrication (moulage) aisée et procurant au joint de bonnes performances en matière de fiabilité et de durabilité.

Le joint selon l'invention est ainsi particulièrement avantageux vis-à-vis d'un joint où le canal d'introduction n'est obtenu qu'à partir de la seule matière élastomère ou à partir de la juxtaposition, par collage, d'une paroi de contact en matière élastomère et d'une buse relativement rigide d'introduction de la matière à mouler.

Selon des caractéristiques préférées, ladite ouverture de coulée est pratiquée dans ladite matière élastomère et vient de moulage.

L'ouverture de coulée bénéficie ainsi des avantages susmentionnés, notamment en ce qui concerne la simplicité de fabrication et la précision ainsi que la reproductibilité de sa conformation, le fait que cette ouverture soit pratiquée dans la matière élastomère évitant toute discontinuité de la paroi de contact susceptible de nuire à la qualité des lentilles fabriquées ou d'introduire des limitations quant à l'épaisseur des bords des lentilles optiques à mouler.

Selon d'autres caractéristiques préférées pour des raisons de simplicité, de commodité et de fiabilité tant à la fabrication qu'à l'utilisation :
- ladite ouverture de coulée est en forme de boutonnière ;
- ledit canal d'introduction comporte une portion convergeant vers ladite ouverture de coulée entièrement délimitée par de la matière élastomère ;
- ledit canal d'introduction comporte à l'opposé de ladite ouverture de coulée, un renfoncement s'étendant jusqu'à une surface d'épaulement, et comporte une portion convergeant de ladite surface d'épaulement jusqu'à ladite ouverture de coulée ;
- ledit insert présente une surface interne entièrement surmoulée par de la matière élastomère ;
- ledit insert présente une surface interne surmoulée par une couche de matière élastomère d'épaisseur constante ;
- ledit joint comporte un corps formant ladite paroi de contact et un fût comportant ledit insert saillant d'une face dudit corps opposée à ladite cavité de moulage ;
- ledit insert forme au moins une portion de la surface latérale externe dudit fût ;
- ladite portion de la paroi latérale externe dudit fût formée par ledit corps présente un filetage ;
- ledit insert comporte un corps partiellement surmoulé par ladite matière élastomère et une tête entièrement surmoulée par ladite matière élastomère ;
- ladite tête comporte une nervure annulaire disposée entre deux gorges ;
- ladite tête comporte une extrémité disposée à mi-épaisseur d'un corps formant ladite paroi de contact ;
- ledit joint comporte un corps en gouttière formant ladite paroi de contact et comporte des rebords longeant chacun une extrémité rectiligne respective dudit corps, en saillant radialement de la face opposée à ladite cavité de moulage ; et/ou
- chaque dit rebord comporte une face dans le prolongement d'une tranche dudit corps, ladite face et ladite tranche formant ensemble une surface présentant une section en dents de scie.

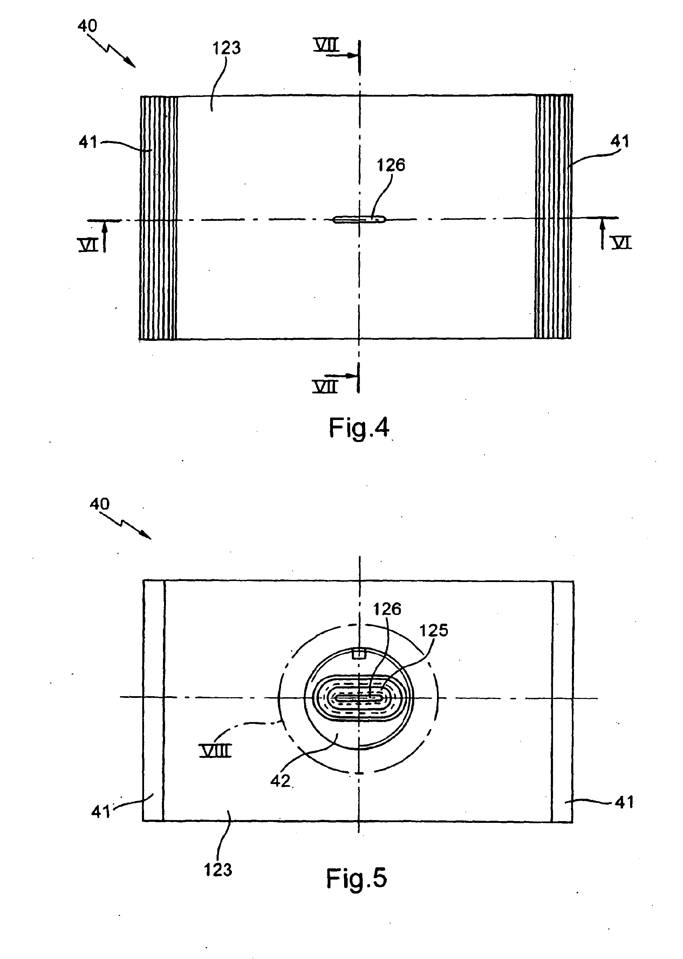

L'exposé de l'invention sera maintenant poursuivi par la description d'un exemple de réalisation, donnée ci-après à titre illustratif et non limitatif, à l'appui des figures 4 et suivantes des dessins annexés, où :
- la figure 4 est une vue en plan d'un joint faisant partie d'un élément de fermeture d'un dispositif conforme à l'invention, cette vue étant prise du côté de la cavité de moulage ;
- la figure 5 est une autre vue en plan de ce joint, prise du côté opposé ;

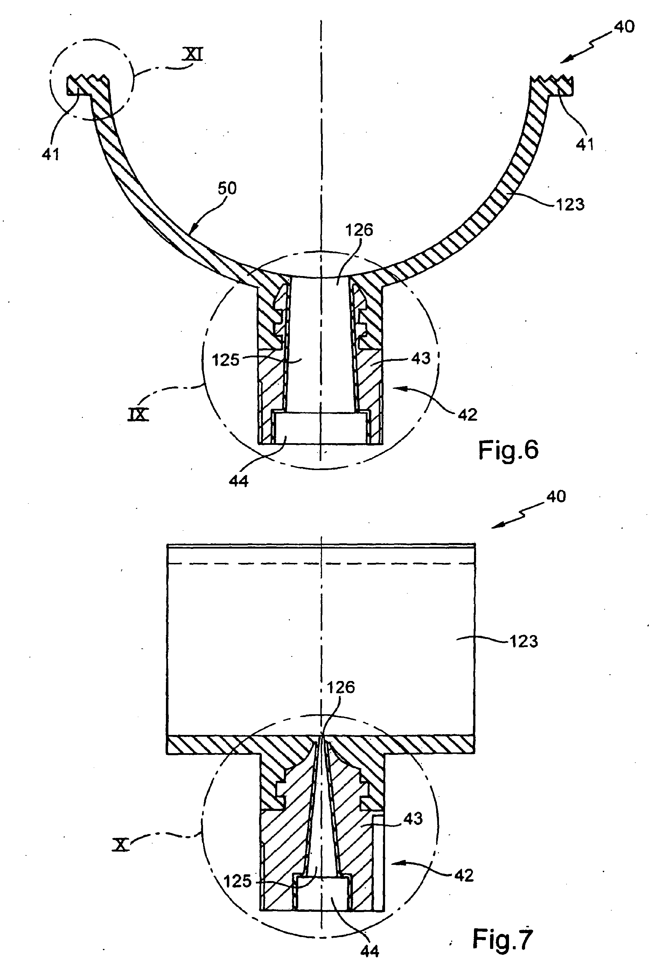

- les figures 6 et 7 sont les vues en coupe repérées respectivement par VI-VI et VII-VII sur la figure 4 ; et

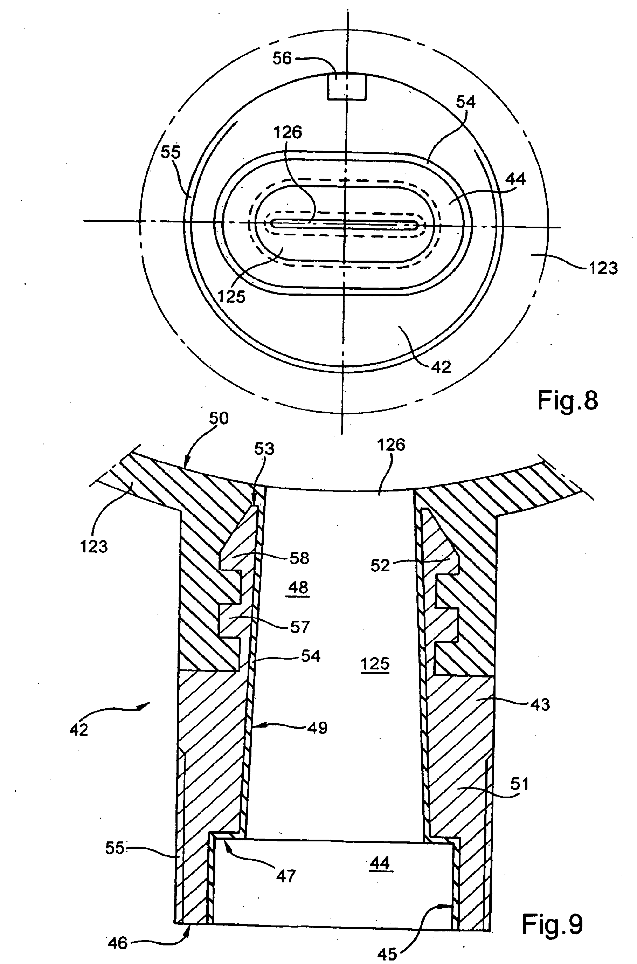

- les figures 8 à 11 sont des vues de détail agrandies, repérées respectivement par VIII sur la figure 5, par IX sur la figure 6, par X sur la figure 7 et par XI sur la figure 6.

Le joint 40 illustré sur les figures 4 à 11 fait partie d'un élément de fermeture semblable à l'élément de fermeture 12 du dispositif 11 décrit ci-dessus, et plus précisément d'un mors semblable au mors 12' mais équipé d'un dispositif de remplissage (vanne et buse) tel que décrit par les demandes de brevet européen 1 440 780 et 1 440 788 susmentionnées.

Le joint 40 est prévu pour être fixé au reste du mors dont il fait partie par collage, ce mors ne comportant pas de brides de fixation telles que les brides 24.

Dans ce qui suit, on a employé pour les éléments similaires les mêmes références que pour le dispositif 11, mais additionnées du nombre 100.

Le joint 40 comporte un corps 123, deux rebords 41 et un fût 42.

Le joint 40 est fait d'une matière élastomère et d'un insert en matière relativement rigide 43, situé dans le fût 42, surmoulé par la matière élastomère.

Le corps 123 est prévu pour servir de revêtement interne au mors auquel appartient le joint 40 (mors semblable au mors 12'). Le corps 123 forme ainsi une paroi de contact pour les coquilles telles que 14A et 14B.

Le corps 123 est en forme de gouttière, c'est-à-dire qu'il s'agit d'une paroi d'épaisseur à peu près constante à section en demi-cercle. Ici, le corps 123 présente une longueur d'environ trois-quarts de son diamètre.

Les rebords 41 servent à revêtir les rebords du mors auquel appartient le joint 40 de la même façon que le corps 123 revêt la surface de ce mors semblable à la surface 18.

Les rebords 41 longent chacun une extrémité rectiligne respective du corps 123 sur toute la longueur de celui-ci, en saillant radialement de la face convexe du corps 123 (face située du côté opposé à la cavité de moulage).

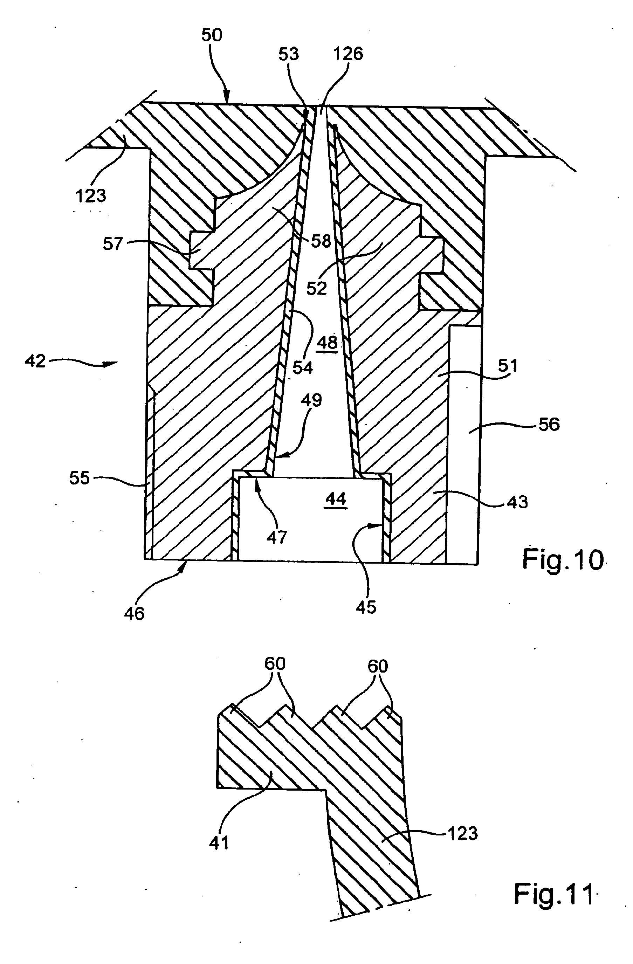

Les rebords 41 ont à peu près la même épaisseur que la paroi qui forme le corps 123. La face supérieure de chaque rebord 41 et la tranche rectiligne correspondante du corps 123 sont dans le prolongement l'une de l'autre. Elles forment ensemble une surface présentant une section en dents de scie, comme on l'expliquera plus en détails ultérieurement à l'appui de la figure 11.

Le fût 42 présente une forme globalement cylindrique. Il saille radialement du côté convexe du corps 123, c'est-à-dire du côté opposé à la cavité de moulage.

Le fût 42 est disposé au centre du corps 123, c'est-à-dire qu'il est disposé à égale distance des extrémités incurvées et à égale distance des extrémités rectilignes du corps 123.

Un canal 125 est ménagé à l'intérieur du fût 42 et au travers du corps 123, le canal 125 débouchant par une ouverture de coulée 126 sur la face concave du corps 123 (face située du côté de la cavité de moulage).

L'ouverture de coulée 126 est en forme de boutonnière, c'est-à-dire qu'il s'agit d'une ouverture étroite et allongée. L'ouverture 126 est orientée suivant un plan transversal central du corps 123.

Chacune des extrémités de l'ouverture 126 est arrondie.

Ici, l'ouverture 126 présente une largeur qui est environ dix sept fois plus petite que sa longueur.

Cette conformation et cette orientation de l'ouverture 126 permet à la distance E_{C} (figure 1) d'être particulièrement faible, ce qui permet de mouler une lentille optique à bords particulièrement minces.

L'extrémité du canal 125 opposée à l'ouverture de coulée 126 est prévue pour être raccordée à des moyens d'alimentation en matière synthétique polymérisable, et plus précisément, ici, à une vanne de remplissage telle que décrite par la demande de brevet européen 1 440 780 susmentionnée.

Pour ce faire, le canal 125 présente à l'extrémité opposée à l'ouverture 126, un renfoncement 44 dont la surface latérale 45 présente un contour oblong.

La surface 45 s'étend de la tranche inférieure 46 du fût 42 jusqu'à une surface d'épaulement 47.

La surface latérale 45 du renfoncement 44 est droite, c'est-à-dire parallèle à l'axe du canal 125. La tranche 46 et la surface d'épaulement 47 sont perpendiculaires à l'axe du canal 125, et sont donc perpendiculaires à la surface latérale 45.

Le contour de la surface latérale 45 présente une largeur qui est d'environ 1,7 fois sa longueur, laquelle est d'environ 1,6 fois la longueur de l'ouverture 126.

La surface d'épaulement 47 présente une largeur (distance entre son contour interne et son contour externe) constante, son contour interne étant oblong comme son contour externe, lequel correspond à celui de la paroi latérale 45.

La largeur de la surface d'épaulement 47 est de l'ordre du huitième de la longueur (plus grande dimension) du renfoncement 44.

Entre la surface d'épaulement 47 et l'ouverture de coulée 126, le canal 125 présente une portion convergente 48 dont la paroi latérale 49 s'étend de la surface d'épaulement 47 à la surface concave 50 du corps 123.

La surface latérale 49 de la portion convergente 48 est régulière, c'est-à-dire que son intersection avec chaque plan de coupe contenant l'axe de la portion 48 est une ligne droite.

Le renfoncement 44 est prévu pour la réception d'un nez de la vanne d'alimentation en matière à mouler, ce nez présentant une surface latérale conformée comme la surface 45 et une tranche, située entre la surface latérale et un orifice de sortie de la vanne, conformée comme la surface d'épaulement 47.

Ainsi, la matière éjectée par l'orifice de sortie de la vanne est conduite par la portion convergente 48 vers l'orifice de coulée 126.

On va maintenant décrire plus particulièrement l'insert 43.

Comme indiqué ci-dessus, l'insert 43 est relativement rigide. Il est ici en matière thermoplastique moulée d'une seule pièce.

L'insert 43 comporte un corps 51 et une tête 52.

Le corps 51 s'étend de la tranche inférieure 46 du fût 42 jusqu'à la tête 52, laquelle tête s'étend du corps 51 jusqu'à une tranche supérieure 53 située à mi-épaisseur du corps 123.

Le corps 51 est surmoulé par la matière élastomère uniquement du côté interne tandis que la tête 52 est entièrement surmoulée par la matière élastomère.

La surface interne de l'insert 43 est conformée comme le canal 125, l'insert 43 étant surmoulé du côté interne par une couche 54 de matière élastomère d'épaisseur constante. Ici, la couche 54 est relativement fine, son épaisseur étant de l'ordre des trois-quarts de la largeur de l'ouverture de coulée 126.

La couche 54 se poursuit jusqu'à la tranche inférieure 46 du fût 42, sur laquelle le corps 51 et la couche 54 sont à fleur l'un de l'autre.

Le corps 51, sur toute sa longueur, soit de la tranche 46 jusqu'à la tête 52, forme la surface latérale externe du fût 42.

Cette surface latérale externe est globalement cylindrique et présente, sur une certaine distance à partir de la tranche 46, un filetage 55. Le corps 51 comporte en outre une rainure 56 débouchant du côté de la tranche 46, s'étendant sur une longueur légèrement supérieure à celle du filetage 55 (voir les figures 7 et 10).

La tête 52 comporte une nervure annulaire 57 de plus petit diamètre que le diamètre externe du corps 51, avec une gorge annulaire située entre le corps 51 et la nervure annulaire 57 et une gorge annulaire semblable entre la nervure 57 et un collet 58 s'étendant de cette gorge jusqu'à la tranche 53.

La surface externe de la matière élastomère qui entoure la tête 52 est à fleur de la surface externe du corps 51 de l'insert 43.

Le filetage 55 du fût 42, fourni par l'insert 43, est utile à la coopération du joint 40 avec le mors dont il fait partie et avec la vanne dont un nez est engagé dans le renfoncement 44.

La couche de matière élastomère 54 qui délimite le renfoncement 44 permet de raccorder de manière étanche le fût 42 et la vanne dont le nez est reçu dans le renfoncement 44.

Le fait que le canal 125 et l'ouverture 126 soient réalisés lors de l'opération de moulage de la matière élastomère permet d'en contrôler la géométrie et l'état de surface de façon particulièrement précise et reproductible, ce qui est favorable à la qualité des lentilles optiques moulées avec l'élément de fermeture dont fait partie le joint 40.

L'assemblage entre l'insert 43 et le reste du joint 40 fait en matière élastomère est en outre particulièrement fiable et résistant y compris en matière de résistance à l'arrachement de l'insert 43, qui est solidement ancré dans la matière élastomère grâce notamment aux deux gorges annulaires qui entourent la nervure 57.

Comme indiqué précédemment, la face supérieure de chaque rebord 41 et la tranche rectiligne correspondante du corps 123 forment ensemble une surface présentant une section en dents de scie, comme on le voit plus particulièrement sur la figure 11.

Dans l'élément de fermeture dont fait partie le joint 40, le mors tel que 12" comporte un joint qui est globalement conformé comme l'image miroir du joint 40 (avec bien entendu en son centre des moyens d'évent et non des moyens d'alimentation en matière à mouler).

En particulier, le joint faisant partie du mors tel que 12" présente un corps dont les extrémités rectilignes sont longées par des rebords semblables aux rebords 41 avec la face supérieure de chaque rebord et la tranche rectiligne correspondante du corps du joint qui forment ensemble une surface présentant une section en dents de scie capable de s'emboîter avec la surface opposée en dents de scie du joint 40.

En d'autres termes, les nervures 60 (figure 11) du joint 40 sont reçues dans des gorges de même profil du joint opposé.

L'existence des rebords 41 et la conformation des surfaces de contact entre les deux joints avec une section en dents de scie fait que la valeur de surface de contact est particulièrement élevée, de sorte que l'on obtient d'excellentes performances en matière d'étanchéité.

Dans des variantes non représentées, la conformation du canal d'introduction de la matière à mouler est différente, avec par exemple le renfoncement 44 qui est remplacé par un renfoncement à contour circulaire ou le renfoncement 44 qui est supprimé ; l'insert 43 est différent, par exemple dans une matière rigide autre qu'une matière thermoplastique, par exemple de l'acier usiné, et/ou sa conformation est différente par exemple plus long ou plus court, et/ou l'insert coopère de façon différente avec la matière élastomère, par exemple en étant entièrement surmoulé ou alors surmoulé sur une plus petite partie, en particulier surmoulé uniquement sur une portion de sa surface interne ; le fût 42 est conformé différemment voire aucun fût en saillie n'est prévu ; et/ou les rebords 41 sont conformés différemment, voire aucun rebord tel que 41 n'est prévu.

Dans d'autres variantes non représentées, le joint tel que 40 fait partie d'un élément de fermeture prévu pour mouler des lentilles optiques dont le contours est autre que circulaire, par exemple globalement ovale ; et/ou cet élément de fermeture n'est pas formé par deux mors tels que 12' et 12", dont l'un est fixe et l'autre mobile, mais par exemple par un joint annulaire tel que celui décrit dans la demande internationale WO 03/078144 susmentionnée.

De nombreuses autres variantes sont possibles en fonction des circonstances, et l'on rappelle à cet égard que l'invention ne se limite pas aux exemples décrits et représentés.

## Revendications

1. Dispositif pour la réalisation d'une lentille optique en matière synthétique polymérisable, comportant un élément de fermeture (12) apte à enserrer annulairement deux coquilles de moulage (14A, 14B) pour définir avec lesdites coquilles (14A, 14B) une cavité de moulage (15), ledit élément de fermeture (12) comportant une paroi (123) en matière synthétique pour entrer en contact avec lesdites coquilles de moulage (14A, 14B), ledit élément de fermeture (12) présentant un canal (125) d'introduction de la matière à mouler débouchant dans la cavité de moulage (15) par une ouverture de coulée (126) ; **caractérisé en ce que** ledit élément de fermeture (12) comporte un joint (40) formant ladite paroi de contact (123) et formant ledit canal d'introduction (125), lequel joint (40) est fait d'une matière élastomère et d'un insert (43) rigide surmoulé au moins partiellement par ladite matière élastomère du joint (40) ledit canal d'introduction (125) étant interne audit insert (43).

2. Dispositif selon la revendication 1, **caractérisé en ce que** ladite ouverture de coulée (126) est pratiquée dans ladite matière élastomère et vient de moulage.

3. Dispositif selon l'une quelconque des revendications 1 ou 2, **caractérisé en ce que** ladite ouverture de coulée (126) est en forme de boutonnière.

4. Dispositif selon la revendication 3, **caractérisé en ce que** ledit canal d'introduction (125) comporte une portion (48) convergeant vers ladite ouverture de coulée (126) entièrement délimitée par de la matière élastomère.

5. Dispositif selon l'une quelconque des revendications 1 à 4, **caractérisé en ce que** ledit canal d'introduction (125) comporte à l'opposé de ladite ouverture de coulée (126), un renfoncement (44) s'étendant jusqu'à une surface d'épaulement (47), et comporte une portion (48) convergeant de ladite surface d'épaulement (47) jusqu'à ladite ouverture de coulée (126).

6. Dispositif selon l'une quelconque des revendication 1 à 5, **caractérisé en ce que** ledit insert (43) présente une surface interne entièrement surmoulée par de la matière élastomère.

7. Dispositif selon l'une quelconque des revendications 1 à 6, **caractérisé en ce que** ledit insert présente une surface interne surmoulée par une couche (54) de matière élastomère d'épaisseur constante.

8. Dispositif selon l'une quelconque des revendications 1 à 7, **caractérisé en ce que** ledit joint (40) comporte un corps (123) formant ladite paroi de contact et un fût (42) comportant ledit insert (43) saillant d'une face dudit corps (123) opposée à ladite cavité de moulage (15).

9. Dispositif selon la revendication 8, **caractérisé en ce que** ledit insert (43) forme au moins une portion de la surface latérale externe dudit fût (42).

10. Dispositif selon la revendication 9, **caractérisé en ce que** ladite portion de la paroi latérale externe dudit fût (42) formée par ledit insert (43) présente un filetage (55).

11. Dispositif selon l'une quelconque des revendications 1 à 10, **caractérisé en ce que** ledit insert (43) comporte un corps (51) partiellement surmoulé par ladite matière élastomère et une tête (52) entièrement surmoulée par ladite matière élastomère.

12. Dispositif selon la revendication 11, **caractérisé en ce que** ladite tête comporte une nervure annulaire (57) disposée entre deux gorges.

13. Dispositif selon l'une quelconque des revendications 11 ou 12, **caractérisé en ce que** ladite tête (52) comporte une extrémité (53) disposée à mi-épaisseur d'un corps (123) formant ladite paroi de contact.

14. Dispositif selon l'une quelconque des revendications 1 à 13, **caractérisé en ce que** ledit joint comporte un corps (123) en gouttière formant ladite paroi de contact et comporte des rebords (41) longeant chacun une extrémité rectiligne respective dudit corps (123), en saillant radialement de la face opposée à ladite cavité de moulage (15).

15. Dispositif selon la revendication 14, **caractérisé en ce que** chaque dit rebord (41) comporte une face dans le prolongement d'une tranche dudit corps (123), ladite face et ladite tranche formant ensemble une surface présentant une section en dents de scie.

## Claims

1. Device for producing a polymerizable synthetic material optical lens, including a closure member (12) that is adapted to grip two molding shells (14A, 14B) circumferentially to define a molding cavity (15) in conjunction with said shells (14A, 14B), said closure member (12) including a synthetic material wall (123) adapted to come into contact with said molding shells (14A, 14B) and said closure member (12) incorporating a molding material introduction passage (125) discharging into the molding cavity (15) through a casting opening (126); **characterized in that** said closure member (12) includes a seal (40) that forms said contact wall (123) and said introduction passage (125), which joint (40) is formed of an elastomer material and of a rigid insert (43) at least part of which has said elastomer material of the seal (40) molded over it, said introduction passage (125) being inside said insert (43).

2. Device according to claim 1, **characterized in that** said casting opening (126) is formed in said elastomer material by the molding process.

3. Device according to either claim 1 or claim 2, **characterized in that** said casting opening (126) is buttonhole-shaped.

4. Device according to claim 3, **characterized in that** said introduction passage (125) has a portion (48) that converges towards said casting opening (126) that is entirely delimited by elastomer material.

5. Device according to any one of claims 1 to 4, **characterized in that** said introduction passage (125) includes a recess (44) opposite said casting opening (126) that extends to a shoulder surface (47) and a portion (48) of said shoulder surface (47) that converges to said casting opening (126).

6. Device according to any one of claims 1 to 5, **characterized in that** said insert (43) has an internal surface over the whole of which the elastomer material is molded.

7. Device according to any one of claims 1 to 6, **characterized in that** said insert has an internal surface over which is molded a layer (54) of elastomer material of constant thickness.

8. Device according to any one of claims 1 to 7, **characterized in that** said seal (40) includes a body (123) forming said contact wall and a stem (42) including said insert (43) projecting from a face of said body (123) opposite said molding cavity (15).

9. Device according to claim 8, **characterized in that** said insert (43) forms at least a portion of the lateral external surface of said stem (42).

10. Device according to claim 9, **characterized in that** said portion of the lateral external wall of said insert (43) formed by said body (51) carries a screwthread (55).

11. Device according to any one of claims 1 to 10, **characterized in that** said insert (43) includes a body (51) over part of which said elastomer material is molded and a head (52) over the whole of which said elastomer material is molded.

12. Device according to claim 11, **characterized in that** said head includes an annular rib (57) between two grooves.

13. Device according to either claim 11 or claim 12, **characterized in that** said head (52) includes an end (53) half way through the thickness of a body (123) forming said contact wall.

14. Device according to any one of claims 1 to 13, **characterized in that** said seal includes a gutter-shaped body (123) forming said contact wall and rims (41) each flanking a respective rectilinear end of said body (123) and projecting radially from the face opposite said molding cavity (15).

15. Device according to claim 14, **characterized in that** each of said rims (41) has a face aligned with an edge of said body (123), said face and said edge together forming a surface having a sawtooth section.

## Patentansprüche

1. Vorrichtung zur Herstellung einer optischen Linse aus polymerisierbarem Kunststoffmaterial, umfassend ein Verschlusselement (12), geeignet zum ringförmigen Einfassen zweier Gußkokillen (14A, 14B), um mit den Kokillen (14A, 14B) einen Gußhohlraum (15) zu definieren, wobei das Verschlusselement (12) eine Wandung (123) aus Kunststoffmaterial umfasst, um mit den Gußkokillen (14A, 14B) in Berührung zu treten, wobei das Verschlusselement (12) einen Kanal (125) zum Einführen von Gußmaterial umfasst, mündend in den Gußhohlraum (15) mittels einer Einlassöffnung (126); **dadurch gekennzeichnet, dass** das Verschlusselement (12) eine Dichtung (40) umfasst, die Berührungswandung (123) ausbildend, und den Einführkanal (125) ausbildend, wobei die Dichtung (40) aus einem elastomeren Material und einem starren Einsatz (43), zumindest teilweise mit dem elastomeren Material der Dichtung (40) um- bzw.übergossen gebildet ist, wobei der Einführkanal (125) innerlich bezüglich des Einsatzes (43) vorliegt.

2. Vorrichtung nach Anspruch 1, **dadurch gekennzeichnet, dass** die Einlassöffnung (126) in dem elastomeren Material ausgebildet ist und gußtechnisch gebildet ist.

3. Vorrichtung nach einem der Ansprüche 1 oder 2, **dadurch gekennzeichnet, dass** die Einlassöffnung (126) ein Langloch ist.

4. Vorrichtung nach Anspruch 3, **dadurch gekennzeichnet, dass** der Einführkanal (125) einen Abschnitt (28) aufweist, der hin zu der Einlassöffnung (126) konvergiert, vollständig begrenzt von elastomerem Material.

5. Vorrichtung nach einem der Ansprüche 1 bis 4, **dadurch gekennzeichnet, dass** der Einführkanal (125) gegenüberliegend der Einlassöffnung (126) einen Rücksprung (44) umfasst, sich erstreckend bis zu einer Absatzfläche (47), und einen Abschnitt (48) aufweist, der von der Absatzfläche (47) bis zu der Einlassöffnung (126) konvergiert.

6. Vorrichtung nach einem der Ansprüche 1 bis 5, **dadurch gekennzeichnet, dass** der Einsatz (43) eine vollständig mit elastomerem Material überformte bzw. um- bzw. übergossene Innenfläche aufweist.

7. Vorrichtung nach einem der Ansprüche 1 bis 6, **dadurch gekennzeichnet, dass** der Einsatz eine mit einer Schicht (54) aus elastomerem Material mit konstanter Dicke überformte bzw. um- bzw. übergossene Innenfläche aufweist.

8. Vorrichtung nach einem der Ansprüche 1 bis 7, **dadurch gekennzeichnet, dass** die Dichtung (40) einen Körper (123) umfasst, der die Berührungswandung bildet, sowie einen Schaft (42), der den Einsatz (43) umfassend, und zwar vorspringend bezüglich einer Fläche des Körpers (123), die dem Guß- bzw. Formhohlraum (15) gegenüberliegt.

9. Vorrichtung nach Anspruch 8, **dadurch gekennzeichnet, dass** der Einsatz (43) zumindest einen Abschnitt der lateral äußeren Fläche des Schaftes (42) bildet.

10. Vorrichtung nach Anspruch 9, **dadurch gekennzeichnet, dass** der Abschnitt der externen Lateralwandung des Schaftes (42), der von dem Einsatz (43) gebildet ist, ein Gewinde (55) aufweist.

11. Vorrichtung nach einem der Ansprüche 1 bis 10, **dadurch gekennzeichnet, dass** der Einsatz (43) einen Körper (51) umfasst, teilweise überformt bzw. um- bzw. übergossen mit dem elastomeren Material, sowie einen Kopf (52) der vollständig überformt bzw. um- bzw. übergossen ist mit dem elastomeren Material.

12. Vorrichtung nach Anspruch 11, **dadurch gekennzeichnet, dass** der Kopf eine ringförmige Rippe (57) umfasst, angeordnet zwischen zwei Kehlen.

13. Vorrichtung nach einem der Ansprüche 11 oder 12, **dadurch gekennzeichnet, dass** der Kopf (52) ein Ende (53) aufweist, angeordnet bei halber Dicke eines Körpers (123) der die Berührungswandung bildet.

14. Vorrichtung nach einem der Ansprüche 1 bis 13, **dadurch gekennzeichnet, dass** die Dichtung einen Körper (123) in Rinnenform umfasst, die Berührungswandung ausbildend, und Ränder (41) umfassend, flankierend jeweils bezüglich eines gradlinigen jeweiligen Ende des Körpers (123), und zwar radial vorspringend von der Fläche, die dem Form- bzw. Gußhohlraum (15) gegenübersteht.

15. Vorrichtung nach Anspruch 14, **dadurch gekennzeichnet, dass** jeder Rand (41) eine Fläche in der Verlängerung einer Tranche des Körpers (123) umfasst, wobei die Fläche und die Tranche bzw. Scheibe gemeinsam eine Fläche bilden, die einen sägezahnförmigen Abschnitt aufweist.
